(19) Europäisches Patentamt
European Patent Office
Office européen des brevets

(11) Numéro de publication : **0 070 226**
**B1**

(12) # FASCICULE DE BREVET EUROPÉEN

(45) Date de publication du fascicule du brevet : **24.04.85**

(21) Numéro de dépôt : **82401250.4**

(22) Date de dépôt : **02.07.82**

(51) Int. Cl.[4] : **C 22 B 3/00**, C 22 B 60/02, C 01 G 56/00

(54) **Procédé de séparation des actinides et des lanthanides présents à l'état trivalent, dans une solution aqueuse acide.**

(30) Priorité : **09.07.81 FR 8113530**

(43) Date de publication de la demande : **19.01.83 Bulletin 83/03**

(45) Mention de la délivrance du brevet : **24.04.85 Bulletin 85/17**

(84) Etats contractants désignés : **BE DE GB SE**

(56) Documents cités :
**FR-A- 1 510 877**
**FR-A- 1 534 888**
**FR-A- 1 553 200**
**FR-A- 2 068 159**
**US-A- 3 243 254**
**US-A- 3 743 696**
**US-A- 4 025 602**
**CHEMICAL ABSTRACTS, vol.75, 1971, page 432, résumé no.70035n, Columbus, Ohio (US) A. VAN DALEN: "Solvent extraction and inclusion compound formation with dinonylnaphthal enesulfonic acid"**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Bonnin, Michèle**
**67, Boulevard Dubreuil**
**F-91440 Bures Sur Yvette (FR)**
Inventeur : **Musikas, Claude**
**3, Avenue Moissan**
**F-91440 Bures Sur Yvette (FR)**
Inventeur : **Vitorge, Pierre**
**9, rue Milton**
**F-75009 Paris (FR)**

(74) Mandataire : **Mongrédien, André et al**
**c/o BREVATOME 25, rue de Ponthieu**
**F-75008 Paris (FR)**

**EP 0 070 226 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de séparation des actinides et des lanthanides présents à l'état trivalent dans une solution aqueuse acide, utilisable notamment pour le traitement d'effluents radioactifs.

Dans l'industrie nucléaire, notamment dans le domaine du traitement des effluents aqueux qui contiennent des lanthanides et des actinides tels que des transuraniens, il est d'un grand intérêt de séparer les actinides des lanthanides avant de conditionner ces déchets radioactifs en vue de leur stockage à long terme, par exemple par vitrification.

En effet, on sait que les lanthanides qui sont des produits de fission émetteurs $\beta$ et $\gamma$ ont des périodes beaucoup plus courtes que certains actinides qui sont des éléments émetteurs $\alpha$ à vie plus longue. Aussi, il est préférable de conditionner des déchets ne contenant que des émetteurs à vie courte qui deviennent plus rapidement inactifs, ce qui pose moins de problème pour leur stockage à long terme.

De plus, la récupération des actinides présente un grand intérêt car ils sont utilisables dans différents domaines, par exemple pour la réalisation de sources radioactives. Aussi, il est d'un grand intérêt de séparer les actinides des lanthanides, d'une part, pour récupérer les actinides et, d'autre part, pour ne traiter, en vue du stockage à long terme, que des produits de fission à vie courte, qui présentent un moindre danger.

De même, ce procédé peut trouver des applications dans la production des transuraniens par irradiation neutronique de cibles d'isotopes plus légers, par exemple la production d'américium 241 et de curium 244 provenant du plutonium irradié.

Cependant, le problème de la séparation des actinides et des lanthanides est difficile à résoudre car les ions lanthanides (III) et actinides (III) présentent des propriétés chimiques très peu différentes, leurs rayons ioniques sont voisins et la plupart des complexes formés à partir de lanthanides ou d'actinides ont un caractère ionique marqué.

Les procédés de séparation actinides lanthanides qui ont été utilisés jusqu'à présent, présentent de nombreux inconvénients car ils nécessitent l'utilisation de milieux salins concentrés, par exemple de solutions 10 M en LiCl, ou des pH relativement élevés, ce qui conduit à des difficultés de mise en œuvre.

La présente invention a précisément pour objet un procédé de séparation des actinides et des lanthanides présents à l'état trivalent dans une solution aqueuse qui pallie ces inconvénients et permet de plus d'obtenir une séparation quantitative des actinides et des lanthanides.

Le procédé, selon l'invention, de séparation des actinides et des lanthanides présents à l'état trivalent dans une solution aqueuse acide se caractérise en ce que l'on extrait sélectivement dans un solvant organique les actinides présents dans ladite solution aqueuse en mettant en contact ladite solution avec un solvant organique comprenant un premier extractant constitué par un ligand organique à atome d'azote donneur d'électrons et un second extractant constitué soit par un composé organique organosoluble acide capable d'échanger ses ions $H^+$ par des ions métalliques soit par un sel métallique de ce composé.

Selon une caractéristique avantageuse du procédé de l'invention, le ligand à atome d'azote donneur d'électrons qui constitue le premier extractant est un composé hétérocyclique tel que la 2,4,6-tri(2-pyridyl)-1,3,5-triazine, la 1,10-orthophénanthroline et la 4,7-diamylorthophénanthroline. De préférence, on utilise la 2,4,6-tri(2-pyridyl)-1,3,5 triazine (TPTZ).

Selon l'invention le second extractant est un composé organique, organosoluble, acide, qui est capable d'échanger ses ions $H^+$ par des ions métalliques, et qui a de préférence une constante d'acidité la plus petite possible, par exemple un $pk_a$ inférieur à 4. On peut aussi utiliser les sels métalliques des composés acides répondant à ces caractéristiques, en particulier leurs sels de métaux alcalins tels que le sodium.

A titre d'exemples de composés acides susceptibles d'être utilisés, on peut citer l'acide dinonylnaphtalène sulfonique, l'acide $\alpha$-bromocaprique, l'acide caprique et les sels alcalins de ces acides.

De préférence, le second extractant est l'acide dinonylnaphtalène sulfonique (HDNNS) ou le dinonylnaphtalène sulfonate de sodium (NaDNNS).

Grâce à l'utilisation d'un solvant organique contenant non seulement un ligand à atome d'azote donneur d'électrons, mais également un composé d'acide, les ions actinides trivalents qui sont complexés plus fortement que les ions lanthanides trivalents par le ligand à atome d'azote donneur d'électrons, peuvent être extraits sélectivement dans le solvant organique. Cette influence du composé acide sur l'extraction peut être attribuée à une participation plus importante des liaisons covalentes à la stabilité des complexes des actinides. En effet, en utilisant un deuxième extractant acide capable d'échanger ses ions $H^+$ par des ions métalliques on conserve l'électroneutralité entre la phase aqueuse et la phase organique lors de la formation du complexe selon l'un des schémas réactionnels suivants :

$$M^{3+} + 3AH + nL \rightarrow MA_3L_n + 3H^+$$
$$M^{3+} + mLH + (3 - m)\ AH \rightarrow 3H^+ + ML_mA_{3-m}$$

dans lesquels $M^{3+}$ représente les ions actinides, L représente le ligand azoté, LH représente un ligand azoté acide, AH représente l'extractant acide organosoluble et n et m représentent des nombres entiers.

Le complexe $ML_mA_{3-m}$ ou $MA_3Ln$ formé est

un complexe neutre dont la sphère de coordination est saturée ; aussi il comportera éventuellement, en plus des molécules neutres telles que des molécules d'eau ou d'autres molécules présentes dans le milieu.

Pour la mise en œuvre du procédé de l'invention, on dilue généralement le système d'extractants dans un solvant inerte tel que du tertiobutylbenzène.

Avantageusement, les concentrations des extractants dans le solvant organique sont telles que le rapport molaire du premier extractant (ligand organique à atome d'azote donneur d'électrons) au second extractant (composé acide) soit d'environ 2 : 3 à 4 : 1.

On précise que le procédé de l'invention peut être mis en œuvre dans tout appareil classique d'extraction tel que des batteries de mélangeurs décanteurs, des colonnes pulsées, des extracteurs centrifuges etc.

D'autres caractéristiques et avantages de l'invention apparaîtront mieux à la lecture des exemples suivants donnés bien entendu à titre illustratif et non limitatif, en référence au dessin annexé sur lequel :

la figure 1 est un diagramme représentant les variations des coefficients de distribution $D_{Am}$ de l'américium (courbe 1) et $D_{Eu}$ de l'europium (courbe 2) en fonction de la concentration en TPTZ et en HDNNS du solvant organique, la concentration totale en extractants étant de 0,01 mol.$1^{-1}$ et la solution aqueuse étant constituée par de l'acide nitrique 0,117 N,

la figure 2 est un diagramme représentant les variations des coefficients de distribution $D_{Am}$ (courbes 3 et 5) et $D_{Eu}$ (courbes 4 et 6) en fonction du pH de la solution aqueuse de départ pour deux systèmes de solvant, et

la figure 3 est un diagramme représentant les variations du coefficient de partage de l'américium $D_{Am}$ (courbe 7) et de l'europium $D_{Eu}$ (courbe 8) en fonction de la concentration totale du solvant en extractants.

Dans tous les exemples, on a utilisé le tertiobutylbenzène comme diluant et on a déterminé les coefficients de distribution de l'américium et de l'europium par spectrométrie gamma. La durée d'agitation était de 2 minutes.

On précise que le coefficient de distribution d'un élément est égal au rapport de la concentration de cet élément dans la phase organique à la concentration de ce même élément dans la phase aqueuse.

Exemple 1

Cet exemple se rapporte à la séparation de l'américium (III) et de l'europium (III) au moyen d'un solvant organique comprenant comme premier extractant la 2,4,6-tri(2-pyridyl)-1,3,5-triazine (TPTZ) et comme deuxième extractant l'acide dinonyl naphtalène sulfonique (HDNNS), en solution dans du tertiobutylbenzène, la concentration totale en extractants du solvant organique étant de 0,01 mol.$1^{-1}$.

Pour réaliser l'extraction, on met en contact ce solvant organique avec une solution aqueuse nitrique 0,117 N contenant 240 mg/l d'américium et 150 mg/l d'europium. Après agitation et décantation des deux phases, on mesure la teneur en américium et en europium de chaque phase pour déterminer les coefficients de distribution $D_{Am}$ et $D_{Eu}$.

La figure 1 illustre les variations du coefficient de distribution $D_{Am}$ (courbe 1) et $D_{Eu}$ (courbe 2) en fonction de la teneur du solvant en ligand à atome d'azote donneur d'électrons, exprimée en pourcentage molaire du mélange d'extractants, la teneur totale du solvant en extractants étant de 0,01 mol.$1^{-1}$.

Au vu de cette figure, on constate que l'on obtient les meilleurs résultats lorsque le rapport molaire du premier extractant ou deuxième extractant est voisin de 1. Par ailleurs, on note que de bons résultats sont obtenus lorsque le rapport molaire du TPTZ au HDNNS est dans la gamme 2 : 3 à 4 : 1.

Exemple 2

Dans cet exemple, on utilise comme solvant soit le système I constitué par du tertiobutylbenzène contenant $10^{-2}$ mol.$1^{-1}$ de NaDNNS c'est-à-dire de dinonylnaphtalène sulfonate de sodium et $10^{-2}$ mol.$1^{-1}$ de TPTZ, soit le système II constitué par du tertiobutylbenzène contenant $4.10^{3}$ mol.$1^{-1}$ de HDNNS et $6.10^{-3}$ mol.$1^{-1}$ de TPTZ, et on réalise l'extraction dans les mêmes conditions que celles de l'exemple 1, mais en faisant varier le pH de la solution aqueuse d'acide nitrique.

On détermine comme précédemment les coefficients de distribution de l'américium et de l'europium. Les résultats obtenus sont donnés sur la figure 2. Sur cette figure les courbes 3 et 4 illustrent respectivement les variations du coefficient de partage $D_{Am}$ et $D_{Eu}$ en fonction du pH pour le système solvant n° I et les courbes 5 et 6 illustrent respectivement les variations du coefficient de partage $D_{Am}$ et $D_{Eu}$ en fonction du pH pour le système solvant n° II.

Au vu de cette figure, on constate que la séparation est meilleure dans le cas du système solvant n° I et que de bons résultats sont obtenus dans les deux cas, lorsque le pH se situe à environ 1.

Exemple 3

Dans cet exemple, on utilise comme solvant organique du tertiobutylbenzène contenant du TPTZ et du NaDNNS avec un rapport molaire du TPTZ ou NaDNNS égal à 1, et on fait varier la teneur en extractant du solvant. On réalise l'extraction dans les mêmes conditions que celles de l'exemple 1 avec une phase aqueuse nitrique 0,1 N contenant l'américium et l'europium. On détermine les coefficients de partage de l'américium et de l'europium.

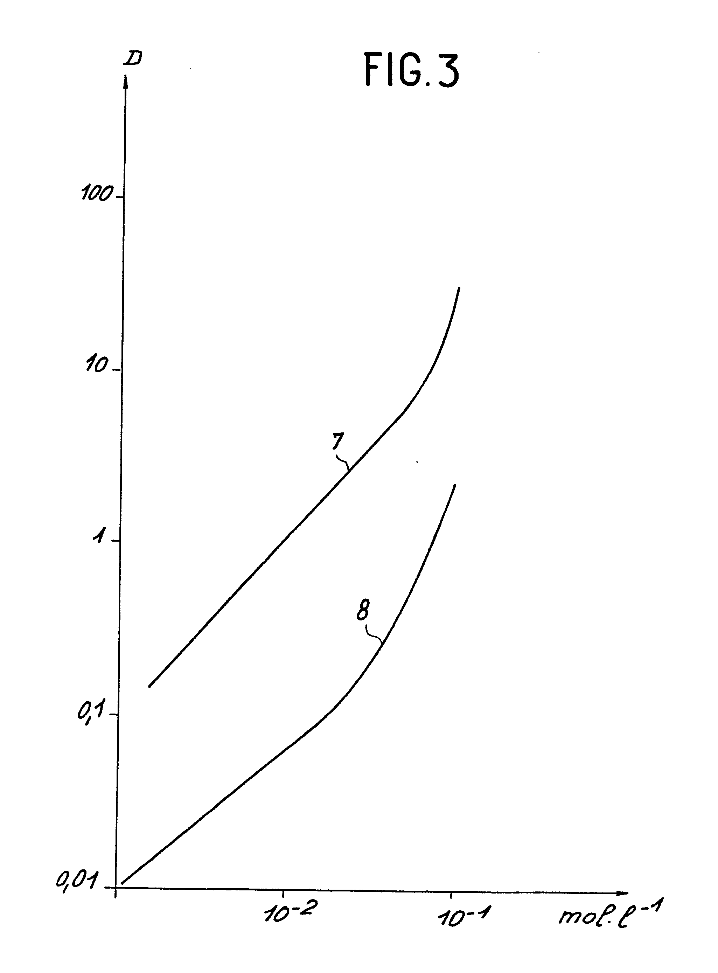

Les résultats obtenus sont donnés sur la figure 3 dont les courbes 7 et 8 illustrent respectivement

les variations des coefficients de partage $D_{Am}$ et $D_{Eu}$ en fonction de la concentration totale en extractants du solvant organique, exprimée en mol.$1^{-1}$.

Exemple 4

Dans cet exemple, on utilise une batterie de mélangeurs-décanteurs comportant sept étages d'extraction et sept étages de lavage et l'on fait circuler dans cette batterie une phase aqueuse constituée par de l'acide nitrique 0,1 N contenant de l'europium, de l'américium, du cérium, du gadolinium, du terbium et du curium à contre-courant d'une phase organique constituée par du tertiobutylbenzène contenant 0,05 mol.$1^{-1}$ de NaDNNS et 0,05 mol.$1^{-1}$ de TPTZ, avec un rapport en volume phase organique sur phase aqueuse de 0,5 dans les étages d'extraction et de 1 dans les étages de lavage.

A la sortie de cette batterie, le solvant contient 99,7 % des actinides et 0,05 % des lanthanides. Dans ces conditions les coefficients de distribution de l'europium, de l'américium, du cérium III, du gadolinium III, du terbium III et du curium III sont respectivement de 0,4 ; 6,0 ; 0,67 ; 0,53 ; 0,3 et 4,6. Ainsi, on obtient une séparation satisfaisante des actinides et des lanthanides. On peut réextraire les actinides en mettant en contact le solvant organique avec une solution aqueuse nitrique 2N dans une batterie de mélangeurs-décanteurs comportant 5 étages avec un rapport en volume de la phase organique à la phase aqueuse d'environ 3. Dans ces conditions, le coefficient de distribution de l'américium est de 0,015 et le solvant organique sortant de la batterie de réextraction ne contiendra plus qu'environ 0,001 % des actinides.

Exemple 5

Dans cet exemple, on utilise une batterie de mélangeurs-décanteurs comportant 7 étages d'extraction et 9 étages de lavage, et on fait circuler à contre-courant dans cette batterie une solution aqueuse nitrique 0,05 N contenant de l'américium, du curium, du terbium, du cérium et du gadolinium, et un solvant organique constitué par du tertiobutylbenzène contenant 0,05 mol.$1^{-1}$ de HDNNS et 0,05 mol.$1^{-1}$ de TPTZ, avec un rapport en volume de la phase organique à la phase aqueuse de 0,4 dans les étages d'extraction et de 0,2 dans les étages de lavage.

Dans ces conditions, on obtient les coefficients de distribution suivants : $D_{Am} = 17$ ; $D_{Cm} = 13$ ; $D_{Tb} = 1{,}06$ ; $D_{Ce} = 1{,}34$ et $D_{Gd} = 0{,}6$.

Ainsi, on obtient à la sortie de la batterie un solvant contenant plus de 99,5 % des actinides et moins de 0,2 % des lanthanides. On réextrait les actinides dans une solution nitrique 2N comme dans le cas de l'exemple 4.

**Revendications**

1. Procédé de séparation des actinides et des lanthanides présents à l'état trivalent dans une solution aqueuse acide, caractérisé en ce que l'on extrait sélectivement dans un solvant organique les actinides présents dans ladite solution aqueuse en mettant en contact ladite solution avec un solvant organique comprenant un premier extractant constitué par un ligand organique à atome d'azote donneur d'électrons et un deuxième extractant constitué soit par un composé organique organosoluble acide capable d'échanger ses ions $H^+$ par des ions métalliques, soit par un sel métallique de ce composé.

2. Procédé selon la revendication 1, caractérisé en ce que le premier extractant est un ligand organique hétérocyclique à atome d'azote donneur d'électrons.

3. Procédé selon la revendication 2, caractérisé en ce que le premier extractant est la 2,4,6-tri(2-pyridyl)-1,3,5-triazine.

4. Procédé selon l'une quelconque des revendications 1 à 3, caractérisé en ce que le deuxième extractant est l'acide dinonylnaphtalène sulfonique.

5. Procédé selon l'une quelconque des revendications 1 à 3, caractérisé en ce que le deuxième extractant est le dinonylnaphtalène sulfonate de sodium.

6. Procédé selon l'une quelconque des revendications 1 à 5, caractérisé en ce que les concentrations desdits extractants dans le solvant organique sont telles que le rapport molaire du premier extractant au deuxième extractant est d'environ 2 : 3 à 4 : 1.

**Claims**

1. Process for the separation of trivalent actinides from lanthanides in an aqueous acidic solution, characterized in that the actinides present in the aqueous solution are selectively extracted into an organic solvent, by contacting said solution with an organic solvent comprising a first extractant constituted by an organic solvent with an electron-donor nitrogen atom, and a second extractant constituted either by an organosoluble organic acid compound, capable of exchanging its $H^+$ ions by metal ions, or by a metal salt of said compound.

2. Process according to Claim 1, characterized in that the first extractant is an heterocyclic organic compound having an electron-donor nitrogen atom.

3. Process according to Claim 2, characterized in that the first extractant is 2,4,6-tri-(2-pyridyl)-1,3,5-triazine.

4. Process according to any one of Claims 1 to 3, characterized in that the second extractant is dinonylnaphthalene sulphonic acid.

5. Process according to any one of Claims 1 to 3, characterized in that the second extractant is sodium dinonylnaphthalene sulphonate.

6. Process according to any one of Claims 1 to 5, characterized in that the concentrations of said extractants in the organic solvent are such that

the molar ratio of the first to the second extractants is in the range from 2 : 3 to 4 : 1.

**Patentansprüche**

1. Verfahren zur Trennung von Actiniden und Lanthaniden, die in einer sauren wäßrigen Lösung in dreiwertigem Zustand vorliegen, dadurch gekennzeichnet, daß man die in der wäßrigen Lösung vorliegenden Actiniden selektiv in ein organisches Lösungsmittel extrahiert, indem man diese Lösung mit einem organischen Lösungsmittel in Kontakt bringt, das umfaßt ein erstes Extraktionsmittel, bestehend aus einem Elektronen abgebenden organischen Liganden mit einem Stickstoffatom, und ein zweites Extraktionsmittel, bestehend entweder aus einer sauren organolöslichen organischen Verbindung, die ihre $H^+$-Ionen gegen Metallionen austauschen kann, oder aus einem Metallsalz dieser Verbindung.

2. Verfahren nach Anspruch 1, dadurch gekennzeichnet, daß das erste Extraktionsmittel ein Elektronen abgebender heterocyclischer organischer Ligand mit einem Stickstoffatom ist.

3. Verfahren nach Anspruch 2, dadurch gekennzeichnet, daß das erste Extraktionsmittel das 2,4,6-Tri-(2-pyridyl)-1,3,5-triazin ist.

4. Verfahren nach einem der Ansprüche 1 bis 3, dadurch gekennzeichnet, daß das zweite Extraktionsmittel die Dinonylnaphthalinsulfonsäure ist.

5. Verfahren nach einem der Ansprüche 1 bis 3, dadurch gekennzeichnet, daß das zweite Extraktionsmittel das Natriumdinonylnaphthalinsulfonat ist.

6. Verfahren nach einem der Ansprüche 1 bis 5, dadurch gekennzeichnet, daß die Konzentrationen der genannten Extraktionsmittel in dem organischen Lösungsmittel so sind, daß das Molverhältnis von erstem Extraktionsmittel zu zweitem Extraktionsmittel etwa 2 : 3 bis 4 : 1 beträgt.

FIG.1

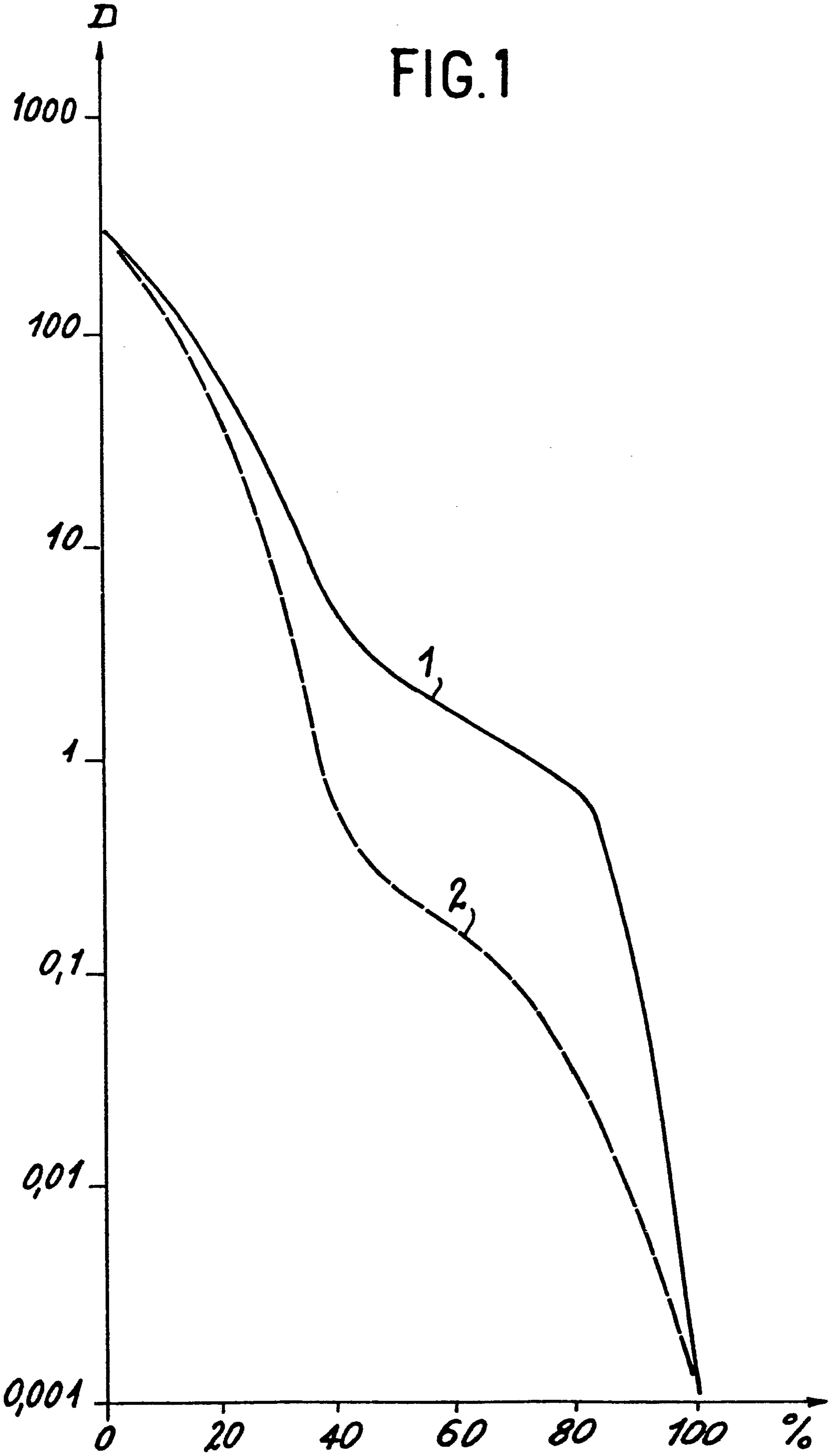

FIG. 2

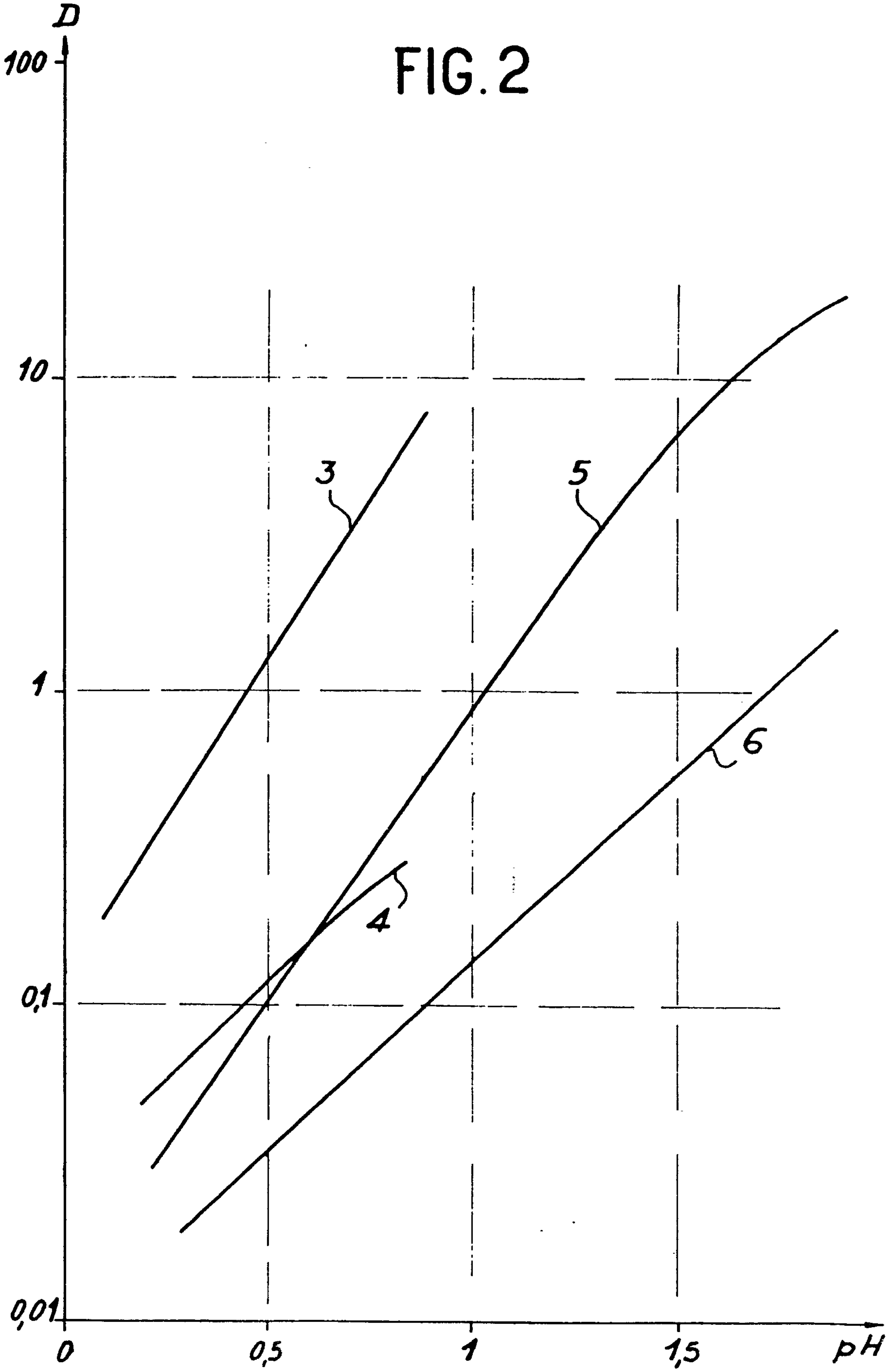

FIG. 3